(19) **Europäisches Patentamt / European Patent Office / Office européen des brevets**

(11) **EP 4 398 266 A1**

(12) # EUROPEAN PATENT APPLICATION
published in accordance with Art. 153(4) EPC

(43) Date of publication:
**10.07.2024 Bulletin 2024/28**

(21) Application number: **21956195.8**

(22) Date of filing: **31.08.2021**

(51) International Patent Classification (IPC):
**G21C 3/34** $^{(2006.01)}$

(52) Cooperative Patent Classification (CPC):
**G21C 3/34;** Y02E 30/30

(86) International application number:
**PCT/RU2021/000374**

(87) International publication number:
**WO 2023/033666 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Publichnoe Aktsionernoe Obshchestvo "Novosibirsky Zavod Khimkontsentratov" (PAO NZHK)**
  **Novosibirsk 630110 (RU)**
- **Chastnoe Uchrezhdenie Po Obespecheniyu Nauchnogo**
  **Razvitiya Atomnoj Otrasli "Nauka I Innovacii"**
  **Moscow, 119017 (RU)**
  Designated Contracting States:
  **BE BG CH CZ DE FI FR GB HU IT LI LU NL SE SK TR**

(72) Inventor: **CHINNOV, Alexander Vladimirovich**
**Novosibirsk 630102 (RU)**

(74) Representative: **Osmans, Voldemars et al**
**Agency Tria Robit**
**P.O. Box 22**
**LV-1010 Riga (LV)**

(54) **NUCLEAR REACTOR FUEL ASSEMBLY SPACER GRID**

(57) The invention relates to nuclear energy, and in particular to elements of fuel assemblies (FAs) of VVER-type nuclear reactors.

Summary of the invention: a spacer grid of a nuclear reactor fuel assembly, comprising a hexagonal rim with a field of hexagonal cells fixed therein, made of a single sheet, so that the folded cells have bends and cuts for the cells in one row of cells arranged on one end face of the spacer grid, and bends and cuts for the cells of the parallel row are placed on the other end face of the spacer grid, wherein the cuts for the cells are designed to form radius elements at the ends of the cell, bent in opposite directions and forming screw deflectors at the ends of the cell, whereon the diameter of the circle inscribed between the three points of the radius elements closest to the center of the cell is calculated by the formula:

$$D = d \cdot k,$$

where
D is the diameter of the circle inscribed between the three points of the radius elements closest to the center of the cell, mm;
d is the diameter of the fuel element, mm;
k is a coefficient taking into account the springing of the bent radius element to ensure tension in the "cell - fuel element" connection.

EP 4 398 266 A1

## Description

## TECHNICAL FIELD OF THE INVENTION

The invention relates to nuclear energy, and in particular to elements of fuel assemblies (FAs) of VVER-type nuclear reactors.

## PRIOR ART

In the safety issues of pressurized water reactors, special attention is paid to the reactor core and, in particular, to one of its components, the fuel assembly (FA), which, as a rule, is equipped with spacer grids. The design features of these grids determine not only the operability of the fuel assembly, but also its critical heat flux margin or the margin in terms of critical heat flux (CHF) and critical power.

The presence of mixing elements on the grids causes mixing of the coolant between the cells and turbulization of the flow within the individual cells. This leads to equalization of the coolant temperature along the cross-section of the fuel channel, and, consequently, to an increase in the critical heat flux margin or critical power margin (see, N.I. Perepelitsa "Space Grids with Local Swirlers for PWR Fuel Assemblies." Nuclear Engineering Abroad, 2006, No.1, p.3).

A known spacer grid for a nuclear reactor fuel assembly has a hexagonal rim with polyhedral cells placed inside it and joined together and to the rim, equipped with internal protrusions (see B.A. Dementiev Nuclear Power Reactors, 11th edition, M.Energoatomizdat 1990, p.44).

A known spacer grid for a nuclear reactor fuel assembly has cells joined together and to the rim, made of strip and provided with internal projections and notches (see patent RU No. 2127001 dated March 27, 1997, published February 27, 1999, IPC 6G21C3/34), in which each pair of adjacent faces of the cells is connected to each other by welded points, which does not exclude lack of penetration of the cells and, as a consequence, a decrease in the reliability of operation in a nuclear reactor, which is one of the disadvantages of this design.

The closest in technical essence and achieved result to the claimed design of the device is a mixing distancing lattice of a nuclear reactor fuel assembly, comprising a hexagonal rim with a field of hexagonal cells fixed therein, provided with internal protrusions in each cell, made of a single sheet, so that the folded cells have bends and cuts for the cells in one row of cells arranged on one end face of the distancing lattice, and bends and cuts for the cells of the parallel row are placed on the other end face of the distancing lattice, wherein the cuts for cells are designed, so that deflectors are formed along the cell ends, bent at an angle to the cell axis in opposite directions (see patent RU No. 2632572, published on 06.07.2017, Bull. No. 28) - prototype.

The disadvantages of the analogs and the prototype are the insufficient level of mixing of the coolant flow during operation in a nuclear reactor and complexity of the design caused by the necessity of internal protrusions in the cells for reliable retention of the fuel elements.

## DISCLOSURE OF THE INVENTION

The technical problem of the invention is to improve the operational characteristics of the spacer grid, namely the function of mixing the coolant flow, with simultaneous reliable placement of the fuel elements in the grid cells, excluding their displacement, with the possibility of achieving the technical result by means of a single design solution. This will simplify the design, ensure manufacturability and reduce the cost of the product.

The stated technical problem is solved by a spacer grid of a nuclear reactor fuel assembly, comprising a hexagonal rim with a field of hexagonal cells fixed therein, made of a single sheet, so that the folded cells have bends and cuts for the cells in one row of cells arranged on one end face of the spacer grid, and bends and cuts for the cells of the parallel row are placed on the other end face of the spacer grid, these cuts for the cells are designed to form radius elements at the ends of the cell, bent in opposite directions and forming screw deflectors at the ends of the cell, according to the invention, the diameter of the circle inscribed between the three points of the radius elements closest to the center of the cell is calculated by the formula:

$$D = d \cdot k,$$

where

D is the diameter of the circle inscribed between the three points of the radius elements closest to the center of the cell, mm;
d is the diameter of the fuel element, mm;
k is a coefficient taking into account the springing of the bent radius element to ensure tension in the "cell - fuel element" connection.

The cell design without internal protrusions that partially screen the coolant flow, and with screw deflectors at the ends of the cell, formed when making cuts under the cells and bending the radius elements obtained when making cuts in opposite directions, makes it possible to improve the quality of mixing of the coolant flow.

Manufacturing of the cell taking into account the design diameter of the circle inscribed between the three points of the radius elements closest to the center of the cell based on the above formula allows to simplify the design, ensure manufacturability, and reduce the cost of the product with simultaneous achievement of reliable retention of the fuel elements.

**Brief description of drawings**

The essence of the invention is explained by drawings:

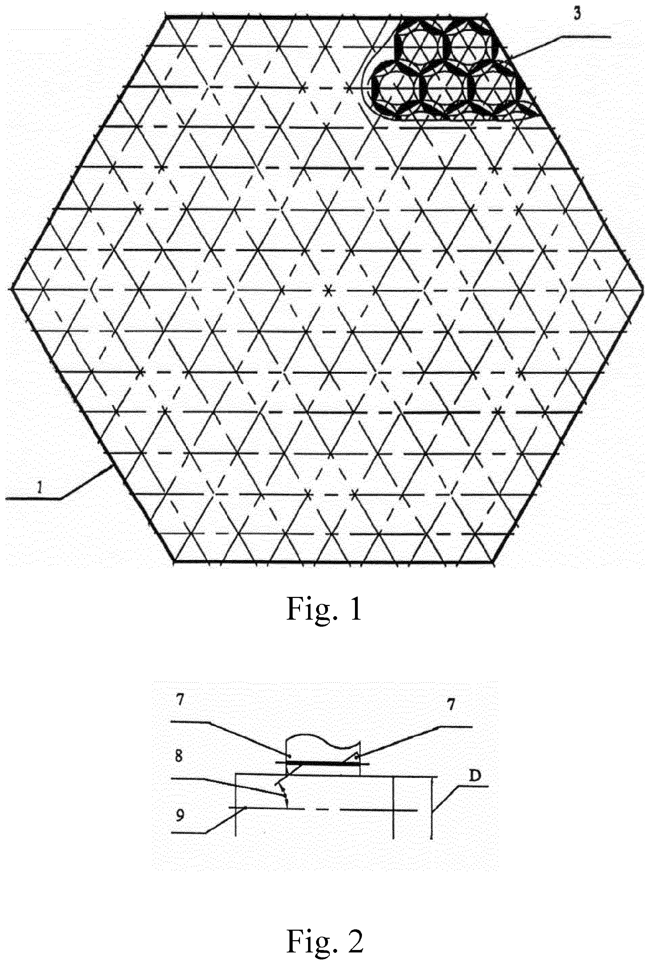

Fig.1 - spacer grid of a nuclear reactor fuel assembly, general view;
Fig. 2 - placement of a fuel element in a spacer grid cell, fragment;

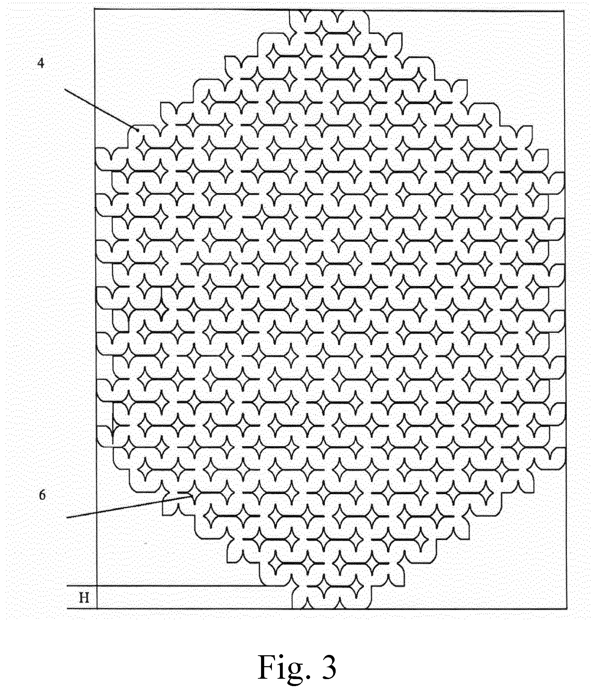

Fig. 3 - spacer grid of a nuclear reactor fuel assembly, blank of a cell field after marking;

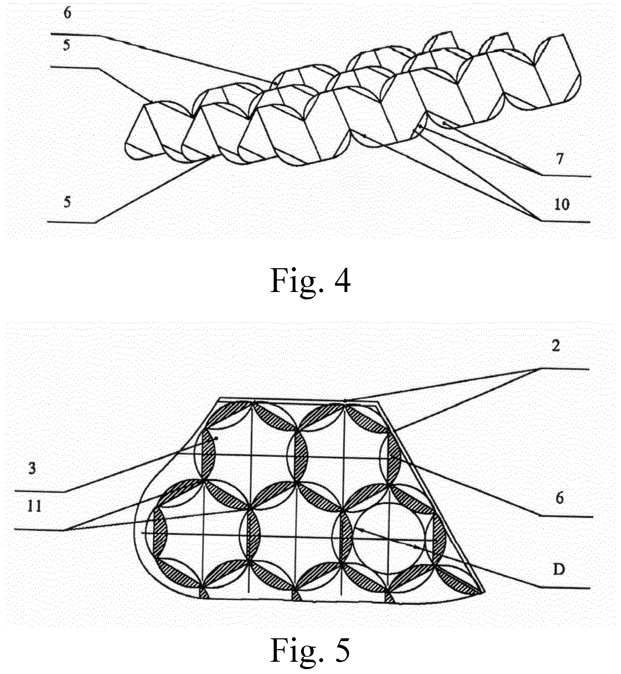

Fig. 4 - spacer grid of a nuclear reactor fuel assembly, pleated blank of a cell field,
Fig .5 - spacer grid of a nuclear reactor fuel assembly, fragment.

A spacer grid of a nuclear reactor fuel assembly comprises a hexagonal rim 1 with a field of hexagonal cells 3 fixed therein by spot welding 2, made from a single sheet 4, so that the folded cells 3 have bends 5 and cuts 6 for the cells 3 in one row of cells arranged on one end face of the spacer grid, and bends and cuts for the cells of the parallel row are placed on the other end face of the spacer grid, these cuts 6 for the cells 3 are made to form radius elements 7 at the ends of the cell 3, bent at an angle of 8 to the axis 9 of the cell 3 in opposite directions along bend lines 10, forming screw deflectors 11 at the ends of the cell 3.

**The best embodiment of the invention**

The structure is manufactured and operated as follows.

A field of hexagonal cells 3 is fabricated from a single sheet 4. To do this, the height "H" of the cells 3, cuts 6 for the cells 3 with radius elements 7 and bend lines 10 are marked on the sheet 4. According to the height marking of the cells 3, the sheet blank 4 of the future cell field 3 is pleated in its upper and lower parts, the operations of manufacturing the plate-type hexagonal cells 3 and set of the cell field 3 are combined, making cuts 6 for the pleated cells 3 in its upper and lower parts with the formation of radius elements 8, radius elements 7 are bent along lines 10 in opposite directions, the adjacent edges of adjacent cells are compressed and fixed by spot welding 2, wherein each cell 3 is formed in such a way that it has vertices at the upper and lower ends in its three corners, and depressions of screw deflectors 11 in three corners.

**Industrial applicability**

When assembling a bundle of fuel elements into a fuel assembly, each fuel element fits into the corresponding cell of the spacer grid, and is guaranteed to be reliably placed therein without displacement. At the same time, when operating a fuel assembly in a nuclear reactor, the cell design without internal protrusions, equipped with deflectors, makes it possible to achieve high-quality mixing of the coolant flow.

Thus, the use of the invention will make it possible to improve the operational characteristics of the spacer grid, namely the function of mixing the coolant flow, which affects the performance of the fuel assembly, its critical heat flux margin or the margin in terms of critical heat flux and critical power, as well as to combine the functions of mixing the flow and holding the fuel elements by single structural elements, which will simplify the design, ensure manufacturability, reduce the cost of the product and increase reliability.

**Claims**

1. A spacer grid of a nuclear reactor fuel assembly, comprising a hexagonal rim with a field of hexagonal cells fixed therein, made of a single sheet, so that the folded cells have bends and cuts for the cells in one row of cells arranged on one end face of the spacer grid, and bends and cuts for the cells of the parallel row are placed on the other end face of the spacer grid, wherein the cuts for the cells are designed to form radius elements at the ends of the cell, bent in opposite directions and forming screw deflectors at the ends of the cell, **characterized in that** the diameter of the circle inscribed between the three points of the radius elements closest to the center of the cell is calculated by the formula:

$$D = d \cdot k,$$

where

D is the diameter of the circle inscribed between the three points of the radius elements closest to the center of the cell, mm;
d is the diameter of the fuel element, mm;
k is a coefficient taking into account the springing of the bent radius element to ensure tension in the "cell - fuel element" connection.

Fig. 1

Fig. 2

Fig. 3

Fig. 4

Fig. 5

## INTERNATIONAL SEARCH REPORT

| | International application No. |
|---|---|
| | PCT/RU 2021/000374 |

**A.  CLASSIFICATION OF SUBJECT MATTER**

G21C 3/34 (2006.01)

According to International Patent Classification (IPC) or to both national classification and IPC

**B.  FIELDS SEARCHED**

Minimum documentation searched (classification system followed by classification symbols)

G21C 3/00, 3/30, 3/32, 3/34

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, Information Retrieval System of FIPS

**C.  DOCUMENTS CONSIDERED TO BE RELEVANT**

| Category* | Citation of document, with indication, where appropriate, of the relevant passages | Relevant to claim No. |
|---|---|---|
| D, A | RU 2632572 C1 (PUBLICHNOE AKTSIONERNOE OBSHCHESTVO "NOVOSIBIRSKIY ZAVOD KHIMKONTSENTRATOV" (PAO "NZKHK ")) 06.10.2017, the claims | 1 |
| A | RU 2255383 C2 (OTKRYTOE AKTSIONERNOE OBSHCHESTVO "NOVOSIBIRSKIY ZAVOD KHIMKONTSENTRATOV") 27.06.2005, abstract | 1 |
| A | RU 2265900 C2 (OTKRYTOE AKTSIONERNOE OBSHCHESTVO "NOVOSIBIRSKIY ZAVOD KHIMKONTSENTRATOV") 10.12.2005 | 1 |
| A | WO 1999/001873 A2 (WESTINGHOUSE ELECTRIC CORPORATION) 14.01.1999 | 1 |

☐  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 March 2022 (30.03.2022) | 12 May 2022 (12.05.2022) |

| Name and mailing address of the ISA/ RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2127001

- RU 2632572

**Non-patent literature cited in the description**

- **N.I. PEREPELITSA.** Space Grids with Local Swirlers for PWR Fuel Assemblies. *Nuclear Engineering Abroad,* 2006, (1), 3

- Nuclear Power Reactors. **B.A. DEMENTIEV.** M.Energoatomizdat. 1990, 44